# FASCICULE DE BREVET EUROPEEN

(11) **EP 1 557 599 B1**
(45) Date de publication et mention de la délivrance du brevet: **06.12.2006**
(21) Numéro de dépôt: 05356014.0
(22) Date de dépôt: 19.01.2005
(51) Int. Cl.: F16L 37/084

(54) **Raccord rapide et procédé de desaccouplement des éléments male et femelle d'un tel raccord**
Schnellkupplung und Verfahren zum Lösen der ineinander gesteckten Teile der Schnellkupplung
Quick acting coupling and method of separating male and female parts of said coupling

(30) Priorité: 20.01.2004 FR 0400493
(43) Date de publication de la demande: 27.07.2005
(73) Titulaire: STAUBLI FAVERGES, 74210 Faverges (FR)
(72) Inventeur: Tiberghien, Alain-Christophe, 74320 Sevrier (FR); Chambaud, Antoine, 74210 Giez (FR)
(74) Mandataire: Myon, Gérard Jean-Pierre

(56) Documents cités:
- WO-A-01/55632
- FR-A- 1 402 040
- FR-A- 2 511 115
- US-A- 4 471 978
- US-A- 4 863 201
- US-A- 5 895 078

## Description

L'invention a trait à un raccord rapide pour la jonction amovible de deux canalisations parcourues par un fluide, ainsi qu'à un procédé de désaccouplement des éléments mâle et femelle d'un tel raccord.

Par les brevets FR 2 514 855 et FR 2 511 115, on connaît des raccords rapides qui comprennent deux éléments mâle et femelle propres à s'emmancher axialement en provoquant l'ouverture d'un clapet monté dans le corps de l'élément femelle, ce corps étant équipé d'un verrou chargé, monté à coulissement dans ce corps et percé d'une ouverture centrale pour l'emmanchement de l'élément mâle. La paroi de l'ouverture du verrou présente des dents décalées l'une par rapport à l'autre le long d'un axe médian de cette ouverture, alors que l'élément mâle est pourvu d'un épaulement apte à reposer sélectivement contre l'une ou l'autre de ces dents. En configuration passante du raccord, une première dent du verrou maintient l'élément mâle en place dans l'élément femelle.

Cet agencement classique donne satisfaction sur le plan de la robustesse et de la fiabilité.

Cependant, ce raccord risque d'être manoeuvré accidentellement à l'ouverture, notamment sous l'effet d'un choc ou d'un accrochage avec un obstacle. En effet, les éléments de raccord rapide sont généralement montés à l'extrémité de tubes flexibles et peuvent faire l'objet, de la part de leur environnement, de différentes contraintes ou interactions susceptibles d'occasionner une ouverture intempestive du raccord.

Dans certaines applications, une telle ouverture intempestive est rédhibitoire dans la mesure où elle peut conduire à l'interruption de l'alimentation d'un organe consommant un fluide. Tel est en particulier le cas des raccords utilisés dans les systèmes destinés à fournir un air respirable à un opérateur en scaphandre dans un environnement hostile ou pollué.

C'est à ces inconvénients qu'entend plus particulièrement remédier l'invention en proposant un raccord rapide qui ne risque pas d'être désaccouplé de façon accidentelle et qui, au contraire, requiert une manoeuvre consciente de l'opérateur, cette manoeuvre étant par ailleurs aisée et intuitive.

Dans cet esprit, l'invention concerne un raccord rapide pour la jonction amovible de deux canalisations parcourues par un fluide, ce raccord comprenant deux éléments mâle et femelle aptes à s'emmancher axialement l'un dans l'autre, le corps de l'élément femelle étant équipé d'un verrou monté à coulissement dans ce corps et percé d'au moins une ouverture pour l'emmanchement de l'élément mâle, la paroi de cette ouverture étant elle-même équipée d'au moins un relief apte à coopérer avec un relief correspondant de l'élément mâle pour retenir les éléments précités en configuration emmanchée. Ce raccord est caractérisé en ce que le verrou est bipartite et comprend une première partie sur laquelle peut être exercé, depuis l'extérieur du corps de l'élément femelle, un effort de déplacement, ainsi qu'une seconde partie mobile par rapport à la première et portant le relief, alors qu'un organe de sécurité est apte à bloquer la première partie à l'encontre de l'effort de déplacement sans empêcher le déplacement du relief par rapport à la première partie.

Grâce à l'invention, l'organe de sécurité peut empêcher qu'un appui intempestif sur la première partie du verrou ne résulte dans une libération accidentelle de l'élément mâle par rapport à l'élément femelle. Par ailleurs, le fait que les mouvements du relief demeurent possibles, même lorsque la première partie du raccord est bloquée par l'organe de sécurité, rend ce verrou compatible avec l'emmanchement de l'élément mâle dans l'élément femelle.

D'autres aspects avantageux mais non obligatoires de l'invention ressortent des revendications 2 à 15.

L'invention concerne également un procédé de désaccouplement des éléments mâle et femelle d'un raccord rapide qui peut être mis en oeuvre avec un raccord tel que décrit ci-dessus. Ce procédé est caractérisé en ce qu'il comprend des étapes consistant à :
- exercer un effort d'emmanchement supplémentaire des éléments mâle et femelle l'un dans l'autre en repoussant, à l'encontre d'un effort élastique, un organe de blocage d'une partie du verrou accessible depuis l'extérieur du corps, puis
- exercer sur cette partie du verrou un effort d'enfoncement dans le corps et
- retirer l'élément mâle de l'élément femelle par un mouvement selon la direction d'emmanchement des éléments précités.
Un tel procédé est tout à fait aisé à mettre en oeuvre par un opérateur, alors qu'il ne risque pas d'être implémenté de façon accidentelle, sous l'effet d'un choc, d'une rotation relative des éléments mâle et femelle, voire d'une pression manuelle sur le verrou, par distraction.

L'invention concerne enfin un raccord apte à être manoeuvré conformément au procédé ci-dessus et dans lequel les éléments mâle et femelle sont aptes à être désaccouplés, après avoir été emmanchés l'un dans l'autre, en exerçant un effort d'emmanchement supplémentaire des éléments mâle et femelle l'un dans l'autre, puis en exerçant sur une partie du verrou accessible depuis l'extérieur du corps un effort d'enfoncement de cette partie dans ce corps et en retirant l'élément mâle de l'élément femelle par un mouvement parallèle à la direction d'emmanchement.

L'invention sera mieux comprise et d'autres avantages de celle-ci apparaîtront plus clairement à la lumière de la description qui va suivre de deux modes de réalisation d'un raccord conforme à son principe et de sa méthode d'utilisation, donnée uniquement à titre d'exemple et faite en référence aux dessins annexés, dans lesquels :
- la figure 1 est une coupe longitudinale de principe d'un élément femelle d'un raccord rapide conforme à un premier mode de réalisation de l'invention ;
- la figure 2 est une coupe analogue à la figure 1 alors que l'élément mâle du raccord rapide est introduit dans l'élément femelle ;
- la figure 3 est une coupe à plus grande échelle des éléments mâle et femelle en configuration accouplée ;
- la figure 3A est une vue à plus grande échelle du détail A à la figure 3 ;
- la figure 4 est une coupe selon la ligne IV-IV à la figure 3, mais à l'échelle des figures 1 et 2 ;
- la figure 5 est une coupe selon la ligne V-V à la figure 3, mais à l'échelle des figures 1 et 2 ;
- la figure 6 est une coupe analogue à la figure 2, lors d'une première étape du désaccouplement des éléments mâle et femelle ;
- la figure 7 est une coupe analogue à la figure 6, lors d'une seconde étape du désaccouplement ;
- la figure 8 est une vue en perspective des deux parties constitutives du verrou du raccord des figures 1 à 7 ;
- la figure 9 est une coupe analogue à la figure 1 pour un raccord conforme à un second mode de réalisation de l'invention ;
- la figure 10 est une coupe analogue à la figure 2 pour le raccord de la figure 9 ;
- la figure 11 est une coupe à plus grande échelle des éléments mâle et femelle du raccord des figures 9 et 10 en configuration emmanchée ;
- la figure 12 est une coupe analogue à la figure 10 lors d'une première étape du désaccouplement des éléments mâle et femelle ;
- la figure 12A est une vue à plus grande échelle du détail A à la figure 12 et
- la figure 13 est une coupe analogue à la figure 12 lors d'une seconde étape du désaccouplement.

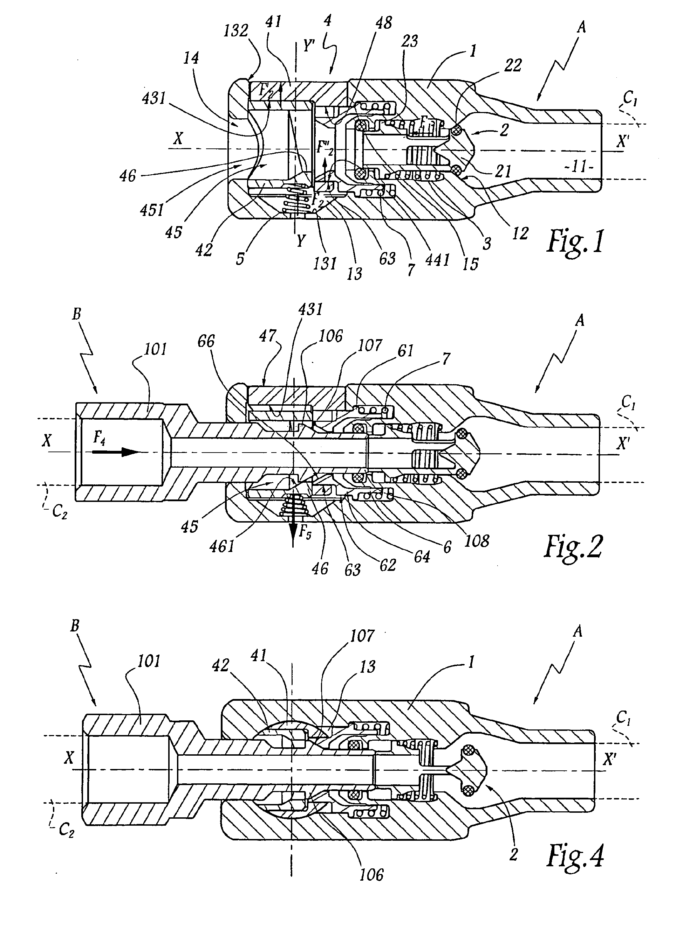

Le raccord représenté aux figures 1 à 7 comprend un élément femelle A et un élément ou embout mâle B raccordés respectivement à une canalisation amont C₁ et à une canalisation aval C₂. La canalisation amont est, elle-même, raccordée à une source de fluide sous pression non représentée, par exemple une source d'air sous pression, la canalisation C₂ étant elle-même reliée, par exemple, à un appareil respiratoire d'un scaphandre.

Le corps 1 de l'élément femelle est de forme externe globalement cylindrique à base circulaire, centré sur un axe X-X' qui est également l'axe longitudinal d'un conduit 11 interne au corps 1 et dans lequel est disposé un clapet 2 mobile selon l'axe X-X'.

Le clapet 2 est soumis à l'action d'un ressort de rappel 3 qui exerce un effort F₁ tendant à plaquer une tête 21 du clapet 2 pourvue d'un joint torique 22 contre un siège 12 d'appui étanche formé par le corps 1. Le clapet 2 est pourvu d'une collerette radiale externe 23 contre laquelle vient en appui le ressort 3.

Le corps 1 est également pourvu d'un logement borgne 13 s'étendant globalement dans la direction d'un axe Y-Y' perpendiculaire à l'axe X-X', c'est-à-dire radial par rapport au corps 1. A l'intérieur du logement 13 est monté, à coulissement, un verrou 4 sur lequel un ressort 5 exerce un effort élastique F₂ dirigé à l'opposé du fond 131 du logement 13, c'est-à-dire en direction de son débouché 132.

Le verrou 4 est bipartite en ce sens qu'il est constitué d'une première partie, ou partie externe, 41 et d'une seconde partie, ou partie interne, 42, cette partie interne étant reçue dans un logement en creux 43 débouchant à la fois en direction du fond 131 du logement 13 et en direction de l'embouchure 14 du corps 1 par laquelle peut être introduit le corps 101 de l'about mâle B.

La partie 41 définit également une ouverture globalement circulaire 44 qui jouxte le logement 43.

La partie 42 est pourvue d'une ouverture centrale 45 qui est bordée par un relief 46 destiné à constituer un relief ou une dent d'arrêt d'une collerette 106 prévue à la périphérie du corps 101 de l'élément mâle B.

En l'absence d'interactions avec l'élément B, la partie 42 du verrou 4 est plaquée par le ressort 5 contre le fond 431 du logement 43.

On note 47 la surface de la partie 41 qui est accessible par le débouché 132 du logement 13, c'est-à-dire la surface sur laquelle un utilisateur peut exercer un effort de déplacement F₃ du verrou 4 en direction du fond 131 du logement 13.

Un organe de sécurité 6 en forme de piston est prévu dans le corps 1 et est chargé élastiquement par un ressort 7 en direction de l'embouchure 14. Ce piston 6 est à symétrie de révolution autour de l'axe X-X' et comprend une collerette radiale externe 61 destinée à venir en appui contre un épaulement interne 15 du corps 1, ceci afin de limiter le mouvement du piston 6 en direction de l'embouchure 14. A partir de la collerette 61 et en direction de l'embouchure 14, le piston 6 comprend deux surfaces cylindriques 62 et 63 à génératrices rectilignes et bases circulaires, le rayon R₆₂ de la surface 62 étant supérieur au rayon R₆₃ de la surface 63.

On note 64 la partie d'extrémité de l'organe 6 qui est entourée par la surface 62. On note 65 la partie intermédiaire de l'organe 6 qui est entourée par la surface 63.

La partie 65 est introduite dans l'ouverture 44 du verrou 4, de sorte que la partie de sa surface 63 située entre l'axe X-X' et le fond 131 du logement 13 constitue une surface de butée s'opposant aux mouvements du verrou 4 vers l'extérieur du logement 13 sous l'effet de l'effort F₂. En effet, l'effort F₂ exercé par le ressort 5 sur la partie 42 est transmis à la partie 41 sous la forme d'un effort F'₂ transmis au niveau du fond 431 du logement 43, cet effort F'₂ étant lui-même transmis sous la forme d'un effort F''₂ à l'interface entre la surface 63 et la surface circulaire 441 délimitant l'ouverture 44.

Par ailleurs, la surface 62 reçoit en appui une surface 48 de la partie 41 qui est opposée à la surface 47, de sorte que la partie 64 constitue une butée à un effort d'enfoncement du verrou 4 à l'encontre de l'effort F₂.

Ainsi, dans la configuration des figures 1 à 5, le piston 6 empêche un enfoncement intempestif de la partie 41 du verrou 4 à l'intérieur du logement 13.

En revanche, et comme cela ressort des figures 2 à 5, ce piston 6 ne s'oppose pas à un accouplement des éléments mâle et femelle selon la direction X-X'. En effet, lors de l'emmanchement de l'élément mâle B dans l'élément femelle A, la surface tronconique 107, délimitant la collerette 106 du côté de l'extrémité avant 108 du corps 101, forme une rampe d'appui apte à coopérer avec la surface inclinée 461 définissant le relief 46 du côté de l'embouchure 451 de l'ouverture 45. Lorsqu'on exerce un effort F₄ d'emmanchement de l'élément mâle B dans l'élément femelle A, les surfaces 107 et 461 glissent l'une sur l'autre, ce qui a pour effet d'exercer sur la partie 42 du verrou 4, un effort F₅ repoussant cette partie à l'encontre de l'effort F₂, comme représenté à la figure 2. Ceci conduit à un mouvement de la partie 42 dans le logement 43 en direction du fond 131, alors que la partie 41 du verrou 4 demeure immobile par rapport au corps 1.

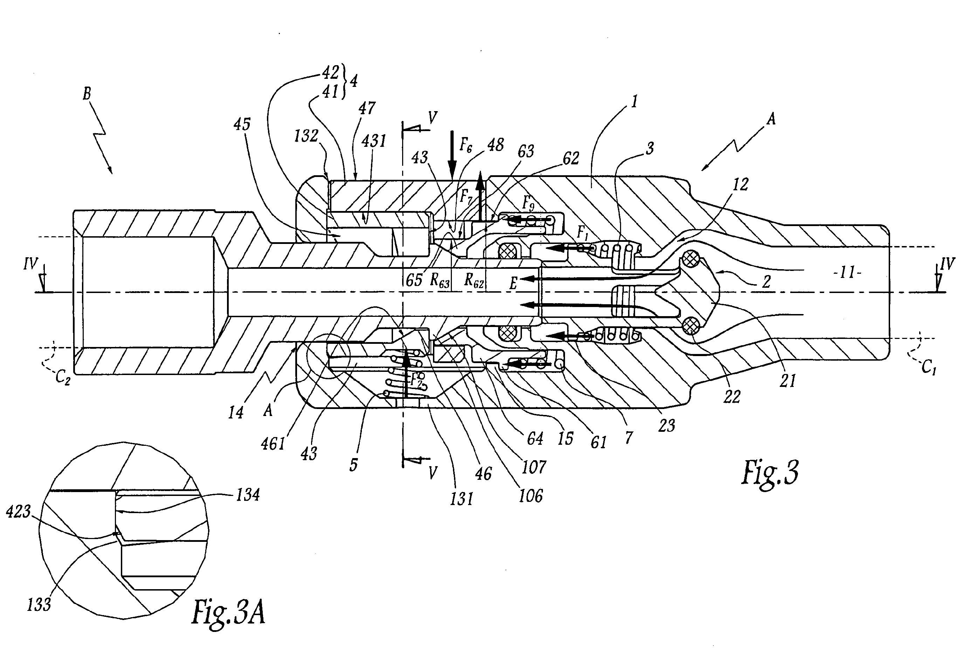

Lorsque la collerette 106 a dépassé le relief 46, le ressort 5 repousse, par son effort F₂, la partie 42 en direction du fond 431 du logement 43. On atteint alors la configuration des figures 3 à 5 où les éléments mâle et femelle sont efficacement retenus en configuration accouplée.

Du fait de l'introduction du corps 101 dans le corps 1, l'extrémité avant 108 a repoussé le clapet 2 à l'encontre de l'effort F₁ et le raccord permet un écoulement de fluide de la canalisation C₁ vers la canalisation C₂, comme représenté par les flèches E.

A partir de cette configuration, si un effort accidentel F₆ est exercé sur la surface 47, cet effort est équilibré par un effort de réaction F₇ dû à la partie 64 de l'organe 6, de telle sorte que les éléments mâle et femelle ne risquent pas d'être désaccouplés. Il en est de même en cas de rotation relative des éléments mâle et femelle autour de l'axe X-X'.

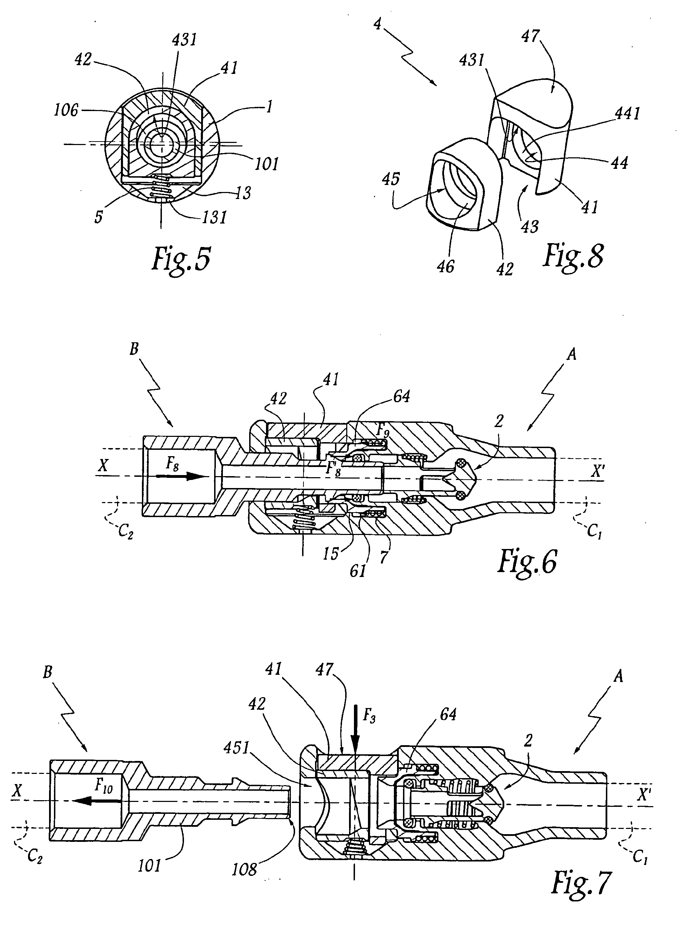

Lorsqu'il convient de désaccoupler les éléments mâle et femelle, il suffit à l'utilisateur d'exercer un nouvel effort F₈ sur le corps 101, cet effort F₈ étant dirigé parallèlement à l'axe X-X' et en direction du corps 1, comme représenté à la figure 6. Dans la mesure où, dans la configuration des figures 3 à 5, la surface 107 est en appui contre une surface tronconique interne 66 de la partie 65, l'effort F₈ est transmis au piston 6 sous la forme d'un effort F'₈ qui a pour effet de repousser le piston 6 à l'encontre de l'effort élastique F₉ généré par le ressort 7. En d'autres termes, l'effort F₈ transmis au piston 6 a pour effet de faire passer cet organe de la configuration des figures 3 à 5 à celle des figures 6 et 7 dans laquelle la partie 64 est repoussée à l'extérieur du logement 13, au point qu'elle n'est plus en regard de la surface 48 et qu'elle ne s'oppose plus au déplacement de la partie 41 sous l'effet d'un effort F₃ exercé sur la surface 47, comme indiqué précédemment.

L'organe ou piston 6 est donc mobile entre la position des figures 1 à 5, où il s'oppose à un enfoncement de la partie 41 en direction du fond 131 du logement 13, et la configuration des figures 6 et 7, où il ne s'oppose pas à un tel mouvement.

Du fait de l'enfoncement de la partie 41 dans le logement 13, la partie 42 est elle aussi déplacée en direction du fond 131, ce qui a pour effet de dégager le relief 46 par rapport à la collerette 106 du corps 101, le corps 101 pouvant alors être aisément retiré du corps 1 par un effort F₁₀ exercé parallèlement à l'axe X-X' et dans une direction opposée à l'effort F₈.

Dans la configuration des figures 6 et 7, la partie 65 du piston 6 demeure engagée dans l'ouverture 44, de sorte que la surface 63 retient efficacement la partie 41 dans le logement 13 lorsque l'utilisateur relâche son effort F₃ et ce, même si le ressort 5 repousse le verrou 4 vers l'embouchure 132.

Comme il ressort plus particulièrement de la figure 3A, le logement 13 est pourvu d'une butée 133 oblique par rapport aux axes X-X' et Y-Y', alors que la partie 42 est pourvue d'un chanfrein 423 également oblique par rapport à ces axes. Dans la configuration des figures 3 à 5, les efforts F₁ et F₉ exercés respectivement par les ressorts 3 et 7 ont pour effet de repousser le corps 101 de l'embout mâle B en direction du débouché 14, de telle sorte que la collerette 106 plaque fermement la partie 42 contre la partie 134 de la surface du logement 13 la plus proche du débouché 14.

Si, du fait d'efforts de frottement se produisant lors d'une rotation relative des éléments mâle et femelle, la partie 42 a tendance à être repoussée à l'encontre de l'effort F₂, le chanfrein 423 vient en appui contre la butée 133, ce qui limite le déplacement de la partie 42 en direction du fond 131 du logement 13. Ainsi, le relief ou dent 46 ne risque pas d'être accidentellement « effacé » par rapport à la collerette 106.

Lorsqu'on souhaite effectivement désaccoupler les éléments mâle et femelle, l'effort F₃ exercé sur la surface 47 est suffisant pour faire glisser la partie 42 contre la surface 134 et contre la butée 133 en ayant vaincu les efforts F₁ et F₉. En d'autres termes, le caractère oblique de la butée 133 permet alors de faire passer à la partie 42 cette butée lorsqu'il convient de déverrouiller les éléments mâle et femelle.

Un raccord conforme à l'invention ne comprend pas nécessairement de logement analogue à celui représenté avec la référence 43. En effet, les parties 41 et 42 peuvent être toutes deux guidées dans le logement 13 indépendamment l'une de l'autre.

L'invention a été représentée avec un verrou dont la seconde partie 42 est « interne » par rapport à sa première partie 41 qui est « externe » et qui définit le logement 43. Elle est cependant applicable avec d'autres configurations de ces parties.

En outre, l'invention n'est pas limitée aux cas où, comme dans l'exemple représenté, la seconde partie 42 est mobile dans le logement 43 en translation parallèlement à la direction Y-Y' de coulissement du verrou. Elle s'applique avec une seconde partie mobile par rapport à la première, en translation selon une direction oblique ou en pivotement.

L'invention est, en pratique, applicable dans tous les cas où le verrou, verrouillé par défaut, porte une dent d'accrochage prévue sur la seconde partie qui reste déplaçable par l'embout mâle vers le bas aux figures 1 à 4, alors que la première partie est bloquée.

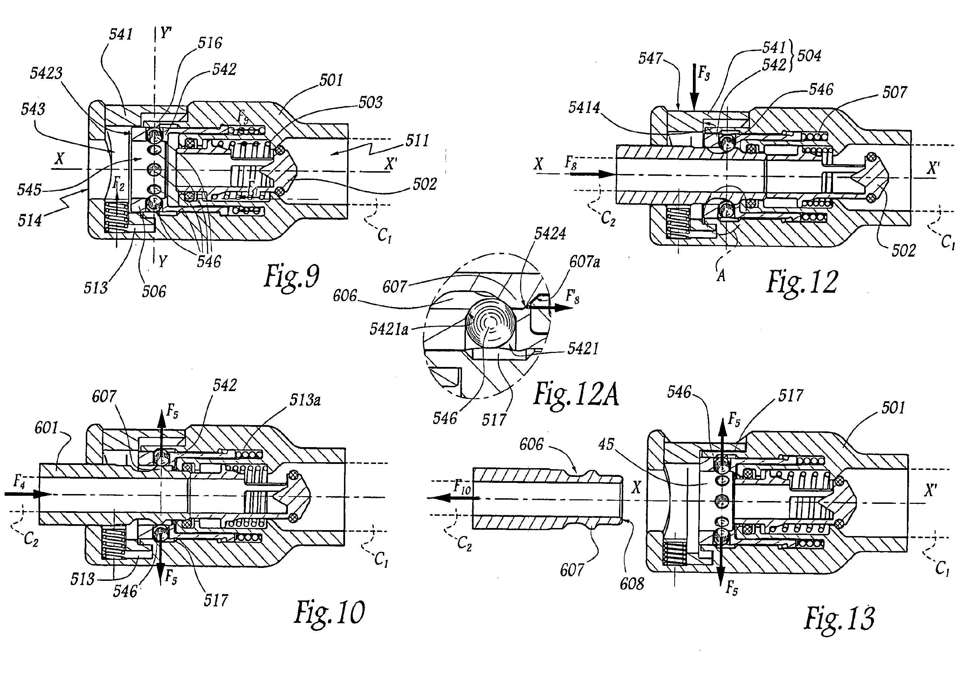

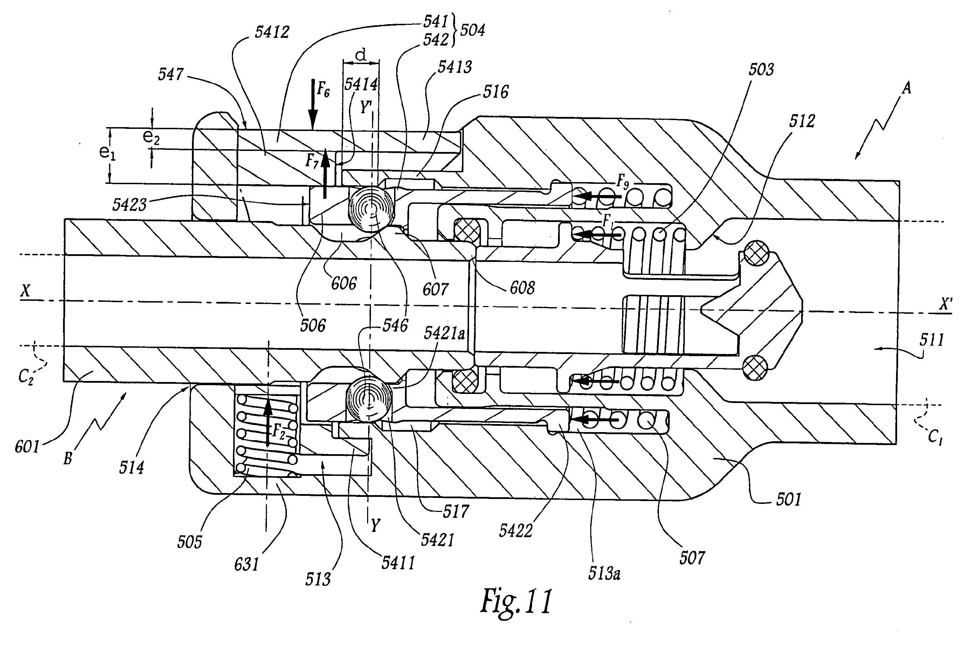

Dans le second mode de réalisation de l'invention représenté aux figures 9 à 13, les éléments analogues à ceux du premier mode de réalisation portent des références identiques augmentées de 500.

Le raccord de ce mode de réalisation comprend un élément femelle A et un élément ou embout mâle B raccordé chacun à une canalisation C₁ ou C₂ comme dans le premier mode de réalisation. Le corps 501 de l'élément femelle est centré sur un axe X-X' qui est également l'axe longitudinal d'un conduit 511 interne au corps 501 et dans lequel est disposé un clapet 502 mobile selon cet axe. Un ressort 503 exerce un effort élastique F₁ de charge du clapet 502 vers sa position de fermeture, en appui contre un siège 512 du corps 501.

Le corps 501 est également pourvu d'un logement borgne 513 qui s'étend globalement selon un axe Y-Y' radial par rapport à l'axe X-X' et dans lequel est disposé une première partie 541 d'un verrou 504, cette partie étant soumise à un effort élastique F₂, exercé par un ressort 505 en appui sur le fond 631 du logement 513.

Le verrou 504 comprend également une seconde partie 542 formée par une bague mobile parallèlement à l'axe X-X' et pourvue de plusieurs orifices 5421 la traversant radialement et dans chacun desquels est disposée une bille 546.

Les orifices 5421 ont, du côté de l'ouverture centrale de la partie ou bague 542, un diamètre réduit par une lèvre périphérique 5421a, ce diamètre étant inférieur à celui des billes 546, ce qui permet de retenir les billes dans les orifices 5421 qui font office de logement.

Pour permettre le coulissement de la partie 542, le logement 513 se prolonge autour du conduit 511 sous la forme d'un renfoncement 513a annulaire, borgne et centré sur l'axe X-X' dans lequel est disposé un ressort 507 qui exerce sur un talon 5422 d'extrémité de la bague 542 un effort F₉ tendant à repousser cette bague 542 en direction de l'embouchure 514 de l'élément femelle A.

Le corps 501 forme un manchon 516 de guidage en translation qui entoure la portion de partie 542 qui n'est pas engagée dans le renfoncement 513a. Le manchon 516 est circulaire et pourvu d'une gorge périphérique interne 517 située à une distance d non nulle du bord libre du manchon 516. Sous l'effet de l'effort F₉, la partie 542 est positionnée de telle sotte que ses orifices 5421 sont en regard de la portion du manchon 516 de largeur d qui est située entre le bord 5423 et la gorge 517. Ainsi, compte tenu du diamètre interne du manchon 516 et du diamètre externe de la partie 542, les billes 546 sont bloquées, par le manchon et à l'intérieur des orifices 5421, dans une configuration où elles font saillie radialement vers l'axe X-X' dans l'ouverture centrale 545.

Le manchon 516 forme également une butée au déplacement de la partie 541 sous l'effet de l'effort F₂ car la partie 541 vient en appui, par une portion 5411, contre la surface radiale externe du manchon 516 la plus proche du fond 631 du logement 613.

Les billes 546 sont destinées à immobiliser l'embout mâle B en s'engageant dans une gorge 606 ménagée sur la surface externe du corps 601 de cet élément.

La partie 542 est engagée radialement à l'intérieur de la partie 541. Plus précisément, la partie 542 peut coulisser parallèlement à l'axe X-X' dans le volume interne central 543 de la partie 541 qui est ouvert du côté du manchon 516.

On note 506 la portion de la bague 542 située entre les orifices 5421 et le bord 5423 de la partie 542 le plus proche de l'embouchure 514.

Sous l'effet de l'effort F₉, la portion 506 est disposée en regard d'une portion 5412 de la partie 541 d'épaisseur e₁ relativement importante, alors que le manchon 516 est disposé en regard d'une portion 5413 de la partie 541 d'épaisseur e₂ de valeur inférieure à celle de l'épaisseur e₁.

Dans la configuration de la figure 11, si un effort F₆ est exercé sur la surface 547 du verrou 504 accessible depuis l'extérieur du corps 501, un effort de réaction F₇ est exercé en retour par la portion 506, ce qui empêche l'enfoncement de la partie 541 en direction du fond 631 du logement 513. La portion 506 constitue donc un organe de sécurité permettant de bloquer l'enfoncement de la partie 541 dans le logement 513.

On note 607 la collerette radiale externe du corps 601 située entre la gorge 606 et l'extrémité avant 608 de ce corps.

Lors de l'emmanchement des éléments A et B, le corps 601 est déplacé en direction de l'arrière du corps 501 et de la canalisation C₁, au point que la collerette 607 vient buter contre les billes 546 qui font saillie dans l'ouverture 545. La poursuite du mouvement d'emmanchement dans le sens de la flèche F₄ à la figure 10 a pour effet de repousser les billes 546 et la partie 542 du verrou 541 jusqu'à ce que les billes se retrouvent en regard de la gorge 517, ce qui permet leur éjection radiale partielle des orifices 5421, comme représenté par les flèches F₅ à la figure 10, en autorisant le passage de la collerette 607 au niveau des billes 546.

Lorsque la collerette 607 a dépasser les billes 546, l'effort F₉ exercé par le ressort 507 repousse la partie 542 du verrou 504 vers l'embouchure 514, ce qui décale les orifices 5421 de la gorge 517, maintient les billes 546 engagées dans la gorge 606 et garantit l'accouplement dans la configuration de la figure 11.

Si, dans cette configuration représentée à la figure 11, un effort F₆ est exercé sur la surface 547 de la partie 541 accessible depuis l'extérieur du logement 513, la portion 5412 de la partie 541 porte contre la portion 506 et l'effort de réaction induit F₇ s'oppose à l'enfoncement de la première partie du verrou 504 dans le logement 513. Ainsi, tout désaccouplement accidentel peut être évité.

Lorsqu'il convient de désaccoupler les éléments mâle et femelle, un effort d'emmanchement supplémentaire F₈ parallèle à l'axe X-X' et dirigé vers l'arrière du corps 501 est exercé sur le corps 601, comme représenté à la figure 12. Le côté 607a de la collerette 607 qui est tourné vers l'extrémité 608 vient alors en appui contre une surface tronconique interne 5424 de la partie 542. Le côté 607a est également tronconique et de géométrie globalement complémentaire de la surface 5424, ce qui permet un appui surfacique de la collerette 607 contre la partie 542. L'effort F₈ est ainsi transmis, sous la forme d'un effort F'₈ réparti autour de l'axe X-X', à la partie 542 qui est repoussée à l'encontre de l'effort F₉.

Sous l'effet de l'effort F'₈, la partie 542 est poussée vers l'arrière du corps 501, dans la configuration de la figure 12, où les orifices 5421 et les billes 546 sont sensiblement en regard de la gorge 517.

Dans cette configuration, il est possible d'exercer sur la surface 547 un effort F₃ dirigé vers le fond 631 et qui a pour effet de déplacer la portion 5412 de la partie 541 jusqu'à une configuration où un épaulement interne 5414, ménagé sur la partie 541 à la transition entre les parties 5412 et 5413, forme une butée au mouvement de la partie 542 en direction de l'embouchure 514 sous l'effet de l'effort F₉. Le bord 5423 vient alors en appui contre l'épaulement 5414.

En d'autres termes, une fois que les billes 546 ont été amenées en regard de la gorge 517, il est possible, en déplaçant la partie 541 du verrou 504 vers le fond du logement 513, de maintenir la partie ou bague 542 dans la position correspondante, ce qui permet que les billes 546 puissent être déplacées radialement vers l'extérieur des orifices 5421 en étant chassées de l'ouverture 545. Il est alors possible d'exercer sur le corps 610 un effort F₁₀ représenté à la figure 13 et de sens opposé à l'effort F₈, cet effort induisant le retrait de l'embout mâle par éjection radiale partielle des billes 546 dans la gorge 517, comme représenté par les flèches F₅.

Ainsi, le raccord de ce second mode de réalisation peut être manipulé de façon intuitive et sécurisée, comme celui du premier mode de réalisation.

Ce raccord présente l'avantage particulier que l'effort de retenu des éléments mâle et femelle en configuration accouplée est réparti autour de l'embout mâle B du fait que les huit billes 546 sont régulièrement réparties autour de l'axe X-X'. L'invention peut fonctionner avec des billes en nombre variable, le nombre de billes étant aisément déterminé par le spécialiste.

Les dimensions des parties constitutives des raccords représentés sont adaptées aux fonctions recherchées, en particulier de guidage et de blocage, ce que le spécialiste conçoit aisément. Ainsi, par exemple, les diamètres externes des éléments 607 et 542 sont légèrement inférieurs aux diamètres internes des éléments 545 et 516.

L'invention a été représentée, pour la clarté du dessin, avec un corps 1 ou 501 d'élément femelle monobloc. Il est bien entendu que ce corps peut être multipartites, notamment afin de permettre la mise en place des éléments 2, 3, 41, 42, 5, 6 et 7 du premier mode de réalisation et des éléments correspondants du second mode de réalisation.

## Revendications

1. Raccord rapide pour la jonction amovible de deux canalisations parcourues par un fluide, ledit raccord comprenant deux éléments mâle et femelle aptes à s'emmancher axialement l'un dans l'autre, le corps de l'élément femelle étant équipé d'un verrou, monté à coulissement dans ledit corps, et percé d'au moins une ouverture pour l'emmanchement dudit élément mâle, la paroi de ladite ouverture étant équipée d'au moins un relief apte à coopérer avec un relief correspondant de l'élément mâle pour retenir lesdits éléments en configuration emmanchée, **caractérisé en ce que** ledit verrou (4 ; 504) est bipartite et comprend une première partie (41 ; 541) sur laquelle peut être exercé, depuis l'extérieur dudit corps (1 ; 501), un effort (F₃, F₆) de déplacement, ainsi qu'une seconde partie (42 ; 542) mobile par rapport à ladite première partie et portant ledit relief (46 ; 546), alors qu'un organe de sécurité (6 ; 506) est apte à bloquer (F₇) ladite première partie à l'encontre dudit effort de déplacement (F₃, F₆), sans empêcher le déplacement (F₅) dudit relief par rapport à la première partie.

2. Raccord selon la revendication 1, **caractérisé en ce qu'**il comprend des moyens (7 ; 507) de charge élastique (F₉) dudit organe de sécurité (6 ; 506) vers une position dans laquelle il bloque (F₇) ladite première partie (41 ; 541).

3. Raccord selon l'une des revendications précédentes, **caractérisé en ce que** ledit verrou (4) est installé dans un logement (13) dans lequel il peut coulisser, sous l'effet de moyens élastiques (5) de rappel en position (F₂) et dudit effort de déplacement (F₃), selon une direction (Y-Y') globalement perpendiculaire à la direction (X-X') d'emmanchement desdits éléments mâle et femelle.

4. Raccord selon la revendication 3, **caractérisé en ce que** ledit logement (13) est pourvu d'une butée (133) apte à recevoir en appui une portion (423) de ladite seconde partie (42) dudit verrou.

5. Raccord selon l'une des revendications 1 ou 2, **caractérisé en ce que** ledit verrou (504) est installé dans un logement (513) dans lequel sa première partie (541) peut coulisser, sous l'effet de moyens élastiques (505) de rappel en position et dudit effort de déplacement (F₃), selon une direction (Y-Y) globalement perpendiculaire à la direction (X-X') d'emmanchement desdits éléments mâle et femelle, alors que sa deuxième partie (542) peut coulisser dans ledit logement (513a) selon une direction globalement parallèle à ladite direction d'emmanchement.

6. Raccord selon l'une des revendications précédentes, **caractérisé en ce que** ladite première partie (41 ; 541) définit un logement (43 ; 543) dans lequel est disposée ladite seconde partie (42 ; 542), ledit logement étant ouvert à l'opposé de la surface (47) d'actionnement de ladite première partie (41) ou latéralement par rapport à ladite première partie (541).

7. Raccord selon l'une des revendications précédentes, **caractérisé en ce que** ledit organe de sécurité (6 ; 506) est mobile, selon une direction (X-X') parallèle à la direction d'emmanchement desdits éléments mâle (B) et femelle (A), entre une première position (fig. 3 ; fig. 11) où il bloque (F₇) ladite première partie (41 ; 541) et une seconde position (fig. 7 ; fig. 13) où il ne s'oppose pas au mouvement dudit relief (46 ; 546) sous l'effet dudit effort de déplacement (F₃).

8. Raccord selon la revendication 7, **caractérisé en ce que** ledit organe de sécurité (6 ; 506) est apte à être déplacé de sa première vers sa seconde position par ledit élément mâle (B).

9. Raccord selon la revendication 8, **caractérisé en ce que** ledit organe de sécurité (6 ; 506) est apte à passer de sa première à sa seconde position sous l'effet d'un emmanchement supplémentaire (F₈) dudit élément mâle (B) dans ledit élément femelle (A), à partir d'une configuration accouplée desdits éléments (fig. 3 ; fig. 11).

10. Raccord selon l'une des revendications 8 ou 9, **caractérisé en ce que** l'organe de sécurité (6 ; 506) est pourvu d'une surface (66 ; 5424) apte à recevoir en appui un relief (106 ; 607) dudit élément mâle (B) pour la transmission d'un effort (F'₈) de déplacement dudit organe de sécurité de sa première vers sa seconde position.

11. Raccord selon l'une des revendications 7 à 10, **caractérisé en ce que** ledit organe de sécurité (6) est pourvu d'une surface (63) formant butée au déplacement dudit verrou (4) sous l'effet de moyens élastiques (5) de rappel en position (F₂) et **en ce que** ladite surface est apte à s'opposer au déplacement dudit verrou (4) dans chacune des positions dudit organe de sécurité (6).

12. Raccord selon l'une des revendications 1 à 4 et 6 à 11, **caractérisé en ce que** ledit relief (46) est monobloc avec ladite seconde partie (42).

13. Raccord selon l'une des revendications 1, 2 et 6 à 11, **caractérisé en ce que** ledit relief (546) est monté avec possibilité de mouvement sur ladite seconde partie (542).

14. Raccord selon la revendication 13, **caractérisé en ce que** ledit relief est une bille (546), alors que ladite seconde partie est une bague (542) pourvue d'un perçage (5421) la traversant radialement et dans lequel est montée ladite bille, ladite bille pouvant être bloquée en faisant saillie radialement dans l'ouverture centrale (545) de ladite bague ou être chassée radialement à l'extérieur de ladite ouverture, en fonction de la position de ladite seconde partie par rapport à ladite première partie (541).

15. Raccord selon l'une des revendications 1, 2, 6 à 11, 13 et 14, **caractérisé en ce que** ladite seconde partie (542) est monobloc avec ledit organe de sécurité (506).

16. Procédé de désaccouplement des éléments mâle et femelle d'un raccord rapide préalablement emmanchés l'un dans l'autre et retenus en configuration accouplée par la coopération de reliefs ménagés respectivement sur l'élément mâle et dans la paroi d'une ouverture percée dans un verrou monté à coulissement dans le corps de l'élément femelle et dans laquelle est introduit l'élément mâle, **caractérisé en ce qu'**il comprend des étapes consistant à :
- exercer un effort (F₈) d'emmanchement supplémentaire des éléments mâle (B) et femelle (A) l'un dans l'autre en repoussant, à l'encontre d'un effort élastique (F₉), un organe (6) de blocage d'une partie (41 ; 51) du verrou (4 ; 504) accessible depuis l'extérieur dudit corps (1 ; 501), puis
- exercer, sur ladite partie (41 ; 51) un effort (F₃) d'enfoncement dans ledit corps et
- retirer (F₁₀) ledit élément mâle dudit élément femelle par un mouvement selon la direction d'emmanchement (X-X') desdits éléments.

## Claims

1. Quick-acting coupling for the disconnectable connection of two channels through which a fluid flows, said coupling comprising two male and female elements which are able to be fitted axially one into the other, the body of the female element being equipped with a lock which is mounted to slide into said body and pierced by at least one opening for fitting said male element, the wall of said opening being equipped with at least one relief which is able to cooperate with a corresponding relief of the male element in order to retain said elements in a fitted configuration, **characterised in that** said lock (4; 504) is bipartite and comprises a first part (41; 541) on which a displacement force (F₃, F₆) can be exerted from the exterior of said body (1; 501), and also a second part (42; 542) which is mobile relative to said first part and bearing said relief (46; 546) when a safety shut-off device (6; 506) is able to block (F₇) said first part in opposition to said displacement force (F₃, F₆) without preventing the displacement (F₅) of said relief relative to the first part.

2. Coupling according to claim 1, **characterised in that** it comprises means (7; 507) for elastic loading (F₉) of said safety shut-off device (6; 506) towards a position in which it blocks (F₇) said first part (41; 541).

3. Coupling according to one of the preceding claims, **characterised in that** said lock (4) is installed in a housing (13) into which it can slide under the effect of elastic means (5) for position restoration (F₂) and said displacement force (F₃) according to a direction (Y - Y') which is globally perpendicular to the fitting direction (X - X') of said male and female elements.

4. Coupling according to claim 3, **characterised in that** said housing (13) is provided with a stop member (133) which is able to receive in abutment a portion (423) of said second part (42) of said lock.

5. Coupling according to one of the claims 1 or 2, **characterised in that** said lock (504) is installed in a housing (513) into which its first part (541) can slide under the effect of elastic means (505) for position restoration and said displacement force (F₃) according to a direction (Y - Y) which is globally perpendicular to the fitting direction (X - X') of said male and female elements, whereas its second part (542) can slide into said housing (513a) according to a direction which is globally parallel to said fitting direction.

6. Coupling according to one of the preceding claims, **characterised in that** said first part (41; 541) defines a housing (43; 543) in which said second part (42; 542) is disposed, said housing being open opposite the actuation surface (47) of said first part (41) or laterally relative to said first part (541).

7. Coupling according to one of the preceding claims, **characterised in that** said safety shut-off device (6; 506) is mobile according to a direction (X - X') which is parallel to the fitting direction of said male (B) and female (A) elements, between a first position (Fig. 3; Fig. 11) where it blocks (F₇) said first part (41; 541) and a second position (Fig. 7; Fig. 13) where it does not counteract the movement of said relief (46; 546) under the effect of said displacement force (F₃).

8. Coupling according to claim 7, **characterised in that** said safety shut-off device (6; 506) is able to be displaced from its first towards its second position by said male element (B).

9. Coupling according to claim 8, **characterised in that** said safety shut-off device (6; 506) is able to pass from its first to its second position under the effect of a supplementary fitting (F₈) of said male element (B) into said female element (A), from a coupled configuration of said elements (Fig. 3; Fig. 11).

10. Coupling according to one of the claims 8 or 9, **characterised in that** the safety shut-off device (6; 506) is provided with a surface (66; 5424) which is able to receive in abutment a relief (106; 607) of said male element (B) for transmission of a displacement force (F'₈) of said safety shut-off device from its first towards its second position.

11. Coupling according to one of the claims 7 to 10, **characterised in that** said safety shut-off device (6) is provided with a surface (63) forming a limit stop for displacement of said lock (4) under the effect of elastic means (5) for position restoration (F₂) and **in that** said surface is able to counteract displacement of said lock (4) into each of the positions of said safety shut-off device (6).

12. Coupling according to one of the claims 1 to 4 and 6 to 11, **characterised in that** said relief (46) is monobloc with said second part (42).

13. Coupling according to one of the claims 1, 2 and 6 to 11, **characterised in that** said relief (546) is mounted with the possibility of movement on said second part (542).

14. Coupling according to claim 13, **characterised in that** said relief is a ball (546) whereas said second part is a ring (542) which is provided with a piercing (5421) passing through it radially and in which said ball is mounted, said ball being able to be blocked by projecting radially into the central opening (545) of said ring or being moved radially to the exterior of said opening, as a function of the position of said second part relative to said first part (541).

15. Coupling according one of the claims 1, 2, 6 to 11, 13 and 14, **characterised in that** said second part (542) is monobloc with said safety shut-off device (506).

16. Method for separating male and female elements of a quick-acting coupling which have been previously fitted one into the other and retained in a coupled configuration by cooperation of reliefs which are provided respectively on the male element and in the wall of a pierced opening into a lock which is mounted to slide into the body of the female element and into which the male element is introduced, **characterised in that** it comprises steps, comprising:
- exerting a supplementary fitting force (F₈) of male (B) and female (A) elements one into the other by pushing, in opposition to an elastic force (F₉), a device (6) for blocking a part (41; 51) of the lock (4; 504) which is accessible from the exterior of said body (1; 501), then
- exerting, on said part (41; 51), a force (F₃) for penetrating into said body and
- withdrawing (F₁₀) said male element from said female element by a movement according to the fitting direction (X
- X') of said elements.

## Patentansprüche

1. Schnellkupplung für die lösbare Verbindung von zwei von einem Fluid durchströmten Leitungen, wobei die Kupplung zwei Elemente, ein Einsteck- und ein Aufnahmeelement umfasst, die geeignet sind, axial ineinander gesteckt zu werden, wobei der Körper des Aufnahmeelements mit einem Riegel ausgerüstet ist, der gleitend in dem Körper montiert ist und von mindestens einer Öffnung für das Einstecken des Einsteckelements durchdrungen ist, wobei die Wand der Öffnung mit mindestens einer Erhebung ausgerüstet ist, die geeignet ist, mit einer korrespondierenden Erhebung des Einsteckelements zusammenzuarbeiten, um die Elemente im ineinander gesteckten Zustand zu halten, **dadurch gekennzeichnet, dass** der Riegel (4; 504) zweiteilig ist und ein erstes Teil (41; 541), auf das von außen zu dem Körper (1; 501) gesehen eine Verschiebungskraft (F₃, F₆) ausgeübt werden kann, sowie ein zweites Teil (42; 542) umfasst, das in Bezug auf das erste Teil beweglich ist und die Erhebung (46; 546) trägt, wobei ein Sicherheitsorgan (6; 506) geeignet ist, das erste Teil gegen die Verschiebungskraft (F₃, F₆) zu blockieren (F₇), ohne die Verschiebung (F₅) der Erhebung in Bezug auf das erste Teil zu verhindern.

2. Kupplung nach Anspruch 1, **dadurch gekennzeichnet, dass** sie Mittel (7, 507) zur elastischen Vorspannung (f₉) des Sicherheitsorgans (6; 506) in eine Position umfasst, in der es das erste Teil (41; 541) blockiert (F₇).

3. Kupplung nach einem der vorhergehenden Ansprüche, **dadurch gekennzeichnet, dass** der Riegel (4) in einer Aufnahme (13) installiert ist, in der er unter der Wirkung von elastischen Rückstellmitteln (5) in Position (F₂) und der Verschiebungskraft (F₃) entsprechend einer Richtung (Y-Y') im Wesentlichen senkrecht zur Richtung des Ineinandergreifens (X-X') des Einsteck- und Aufnahmeelements gleiten kann.

4. Kupplung nach Anspruch 3, **dadurch gekennzeichnet, dass** die Aufnahme (13) mit einem Anschlag (133) versehen ist, der geeignet ist, einen Bereich (423) des zweiten Teils (42) des Riegels aufzunehmen.

5. Kupplung nach einem der Ansprüche 1 oder 2, **dadurch gekennzeichnet, dass** der Riegel (504) in einer Aufnahme (513) installiert ist, in der sein erstes Teil (541) unter der Wirkung von elastischen Rückstellmitteln (505) in Position und der Verschiebungskraft (F₃) entsprechend einer Richtung (Y-Y') im Wesentlichen senkrecht zur Richtung (X-X') des Ineinandergreifens des Einsteck- und Aufnahmeelements gleiten kann, während sein zweites Teil (542) in der Aufnahme (513a) entsprechend einer im Wesentlichen parallelen Richtung zu der Richtung des Ineinandergreifens gleiten kann.

6. Kupplung nach einem der vorhergehenden Ansprüche, **dadurch gekennzeichnet, dass** das erste Teil (41; 541) eine Aufnahme (43; 543) begrenzt, in der das zweite Teil (42; 542) angeordnet ist, wobei die Aufnahme entgegengesetzt zur Betätigungsfläche (47) des ersten Teils (41) oder seitlich in Bezug auf das erste Teil (541) geöffnet ist.

7. Kupplung nach einem der vorhergehenden Ansprüche, **dadurch gekennzeichnet, dass** das Sicherheitsorgan (6; 506) entsprechend einer Richtung (X-X') parallel zur Richtung des Ineinandergreifens des Einsteck- (B) und Aufnahmeelements (A) zwischen einer ersten Position (Fig. 3; Fig. 11), in der es das erste Teil (41; 541) blockiert (F₇) und einer zweiten Position (Fig. 7; Fig. 13) beweglich ist, in der es sich nicht der Bewegung der Erhebung (46; 546) unter der Wirkung der Verschiebungskraft (F₃) entgegenstellt.

8. Kupplung nach Anspruch 7, **dadurch gekennzeichnet, dass** das Sicherheitsorgan (6; 506) geeignet ist, durch das Einsteckelement (B) von seiner ersten Position in seine zweite Position verschoben zu werden.

9. Kupplung nach Anspruch 8, **dadurch gekennzeichnet, dass** das Sicherheitsorgan (6; 506) geeignet ist, von seiner ersten Stellung in seine zweite Stellung unter der Wirkung eines zusätzlichen Eingreifens (F₈) des Einsteckelements (B) in das Aufnahmeelement (A) von einem gekuppelten Zustand der Elemente (Fig. 3; Fig. 11) aus zu gelangen.

10. Kupplung nach einem der Ansprüche 8 oder 9, **dadurch gekennzeichnet, dass** das Sicherheitsorgan (6; 506) mit einer Fläche (66; 5424) versehen ist, die geeignet ist, in Abstützung eine. Erhebung (106; 607) des Einsteckelements (B) für die Übertragung einer Verschiebungskraft (F'₈) des Sicherheitsorgans von seiner ersten in seine zweite Stellung aufzunehmen.

11. Kupplung nach einem der Ansprüche 7 bis 10, **dadurch gekennzeichnet, dass** das Sicherheitsorgan (6) mit einer Fläche (63), die einen Anschlag für die Verschiebung des Riegels (4) unter der Wirkung von elastischen Rückstellmitteln (5) in die Position (F₂) versehen ist und dass die Fläche in der Lage ist, sich der Verschiebung des Riegels (4) in jeder der Stellungen des Sicherheitsorgans (6) entgegenzustellen.

12. Kupplung nach einem der Ansprüche 1 bis 4 und 6 bis 11, **dadurch gekennzeichnet, dass** die Erhebung (46) einstückig mit dem zweiten Teil (42) ausgebildet ist.

13. Kupplung nach einem der Ansprüche 1, 2 und 6 bis 11, **dadurch gekennzeichnet, dass** die Erhebung (546) mit der Möglichkeit der Bewegung auf dem zweiten Teil (542) angeordnet ist.

14. Kupplung nach Anspruch 13, **dadurch gekennzeichnet, dass** die Erhebung eine Kugel (546) ist, während das zweite Teil ein mit einer Bohrung (5421) versehener Ring (542) ist, die ihn radial durchquert und in der die Kugel angeordnet ist, wobei die Kugel blockiert werden kann, indem sie radial in der Mittelöffnung (545) des Ringes hervorspringend gemacht wird oder radial aus der Öffnung nach außen herausgebracht wird, abhängig von der Position des zweiten Teils in Bezug auf das erste Teil (541).

15. Kupplung nach einem der Ansprüche 1, 2, 6 bis 11, 13 und 14, **dadurch gekennzeichnet, dass** das zweite Teil (542) einstückig mit dem Sicherheitsorgan (506) ausgebildet ist.

16. Verfahren zum Entkuppeln eines Einsteck- und eines Aufnahmeelements einer Schnellkupplung, die zuvor zusammengesteckt wurden und durch Zusammenarbeit von Erhebungen im gekuppelten Zustand gehalten werden, die jeweils an dem Einsteckelement und in der Wand einer Öffnung eingearbeitet sind, die in einem gleitend in dem Körper des Aufnahmeelements angeordneten Riegel durchbohrt ist, wobei das Einsteckelement in das Aufnahmeelement eingesteckt ist, **dadurch gekennzeichnet, dass** es Schritte umfasst, die darin bestehen:
- eine zusätzliche Kraft (F₈) für das Ineinandergreifen der Einsteck- (B) und Aufnahmeelement (A) auszuüben, indem gegen eine elastische Kraft (F₉) ein Blockierorgan (6) eines Teils (41; 51) des Riegels (4; 504) zurückgedrückt wird, das von außen zu dem Körper (1; 501) gesehen, zugänglich ist, dann
- auf das Teil (41; 51) eine Kraft (F₃) zum Eindrücken in den Körper auszuüben und
- das Einsteckelement aus dem Aufnahmeelement durch eine Bewegung entsprechend der Richtung (X-X') des Ineinandergreifens der Elemente zurückzuziehen (F₁₀).
